# EUROPÄISCHE PATENTANMELDUNG

(11) **EP 1 340 646 A1**
(43) Veröffentlichungstag der Anmeldung: **03.09.2003**
(21) Anmeldenummer: 03002881.5
(22) Anmeldetag: 08.02.2003
(51) Int. Cl.: B60M 7/00

(54) **Stromzuführung für Elektro-Strassenfahrzeuge**

(30) Priorität: 27.02.2002 DE 10208440
(71) Anmelder: Eichholz, Willi, 40724 Hilden (DE)
(72) Erfinder: Eichholz, Willi, 40724 Hilden (DE)

(57) **Zusammenfassung**

Es wird eine Stromzuführung für Elektro-Straßenfahrzeuge beschrieben, bei der die positiv bzw. negativ stromführende Stromschiene unter den Fahrzeugen, isoliert auf der korrespondierenden stromführenden, geerdeten, stromleitenden Fahrbahn angeordnet ist.

## Beschreibung

Es wird eine Stromzuführung für Elektro-Straßenfahrzeuge beschrieben, bei der die stromführende Stromschiene -1-, unter den Fahrzeugen, isoliert auf der korrepondierenden, geerdeten, stromleitenden Fahrbahn -2- angeordnet ist.

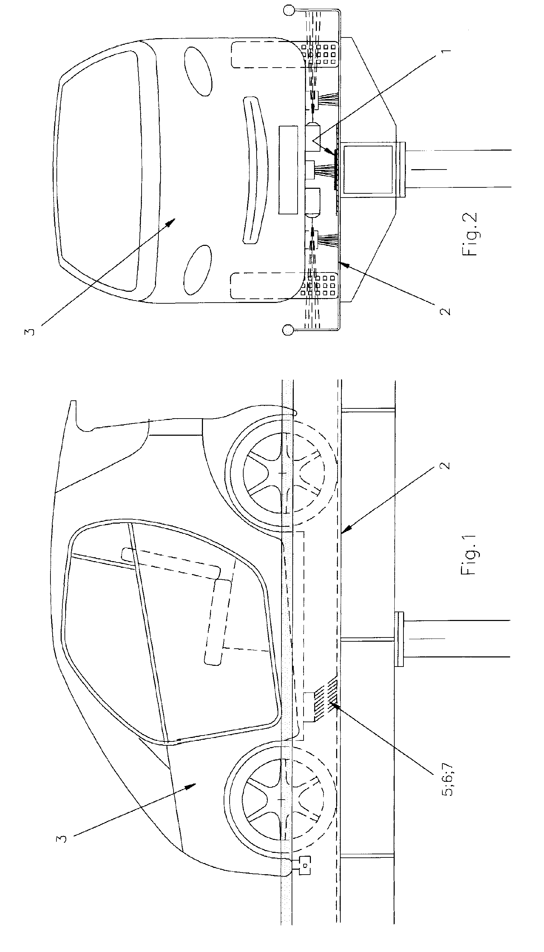

Fig. 1 zeigt ein elektrifiziertes und automatisiertes Straßenfahrzeug -3- von der Seite gesehen.

Fig. 2 zeigt dieses Fahrzeug -3- von vorne gesehen.

Fig. 3 zeigt eine Draufsicht auf Fahrzeug -3- und Fahrbahn -2-.

Fig. 4 zeigt einen Schnitt durch Fahrzeug und Fahrbahn quer zur Fahrtrichtung in einer Kurvensituation.

Fig. 5 zeigt eine Kurvenfahrt mit abhebbaren Strombürsten -5- und -7-.

Bei Schienenfahrzeugen befindet sich die Zuleitung des elektrischen Stromes in Form einer Oberleitung oberhalb der Fahrzeuge. Der Strom wird dann über die Schienen ins Erdreich abgeleitet.

Hier wird vorgeschlagen, für elektrifizierte Straßenfahrzeuge die Zuleitung des elektrischen Stromes mittels einer Stromschiene -1- zu bewerkstelligen, welche unterhalb der Fahrzeuge -3- angeordnet ist.

Auf der Fahrbahn -2- ist zunächst ein Isolator -4- ( -14- ) angebracht und auf diesen die Stromschiene -1- oder Fahrdraht o.dgl.

Als Erdleitung kann die Fahrbahn -2- selbst benutzt werden, wenn diese z.B. eine stromleitende Oberfläche aufweist.

Bei Wechselstrom ergibt sich eine ständige Umkehrung der Stromfließrichtung.

Der links angeordnete Stromabnehmer -7- befindet sich in Kontakt mit dem Teil -9-der Fahrbahn (Fahrstreifen), auf dem die linken Räder laufen.

Der rechts angeordnete Stromabnehmer -5- befindet sich in Kontakt mit dem Teil -10-der Fahrbahn (Fahrstreifen), auf dem die rechten Räder laufen.

Beim Befahren von Abzweigungen bleibt jeweils ein Stromabnehmer -5- oder -7- auf dem korrespondierenden Fahrstreifen -9- oder -10
- und ermöglicht eine durchgängige Stromversorgung.

Hingegen muß der jeweils andere Stromabnehmer -5- bzw. -7- über die Stromschiene-1- hinweggeführt werden.

Wenn die Stromabnehmerbürste -5-; (-7-) mit der Stromschiene -1- Kontakt hat, darf kein Kurzschluß zur Strombürste -7-; (-5-) entstehen. Um dieses zu verhindern können Dioden -13- eingebaut werden.

Ebenfalls darf kein Kurzschluß zwischen der Stromschiene -1- und der Fahrbahn -2-über die Strombürsten -5- und -7- verursacht werden.

Dazu bietet sich an, die Isolierung -4- zu beiden Seiten der Stromschiene -1- so breit auszuführen, so daß diese zur Isolierung -14- wird, und breiter als die Stromabnehmerbürsten -5- bzw. -7- ist.

Dann würden die Stromabnehmerbürsten -5- und -7- zunächst voll mit der Isolierung in Kontakt stehen und dann erst mit dem anderen Strompotential in Verbindung gebracht werden.

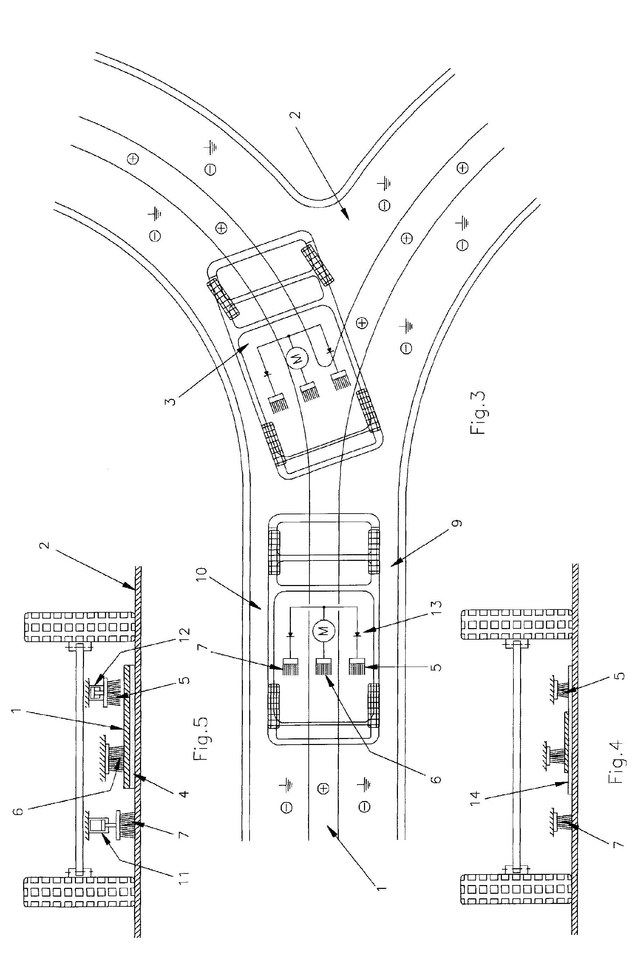

Eine andere Art der Lösung dieses Problems zeigt Fig. 5, dort können die Stromabnehmerbürsten -5- bzw. -7- mittels der Zylinder -11- und -12- von den linken oder rechten Kontaktflächen -9- bzw. -10- abgehoben und mit Abstand über die Stromschiene -1- geführt werden.

Eine durchgängiger Stromfluß wird dadurch sichergestellt.

Abstandsmeßsensoren messen den Abstand zu den Seitenbegrenzungen der Fahrbahn und wirken entsprechend auf die Lenkung ein.

In der aufgezeigten Art ließe sich eine einfache und effektive Stromversorgung für elektrifizierte Straßenfahrzeuge erzielen.

Die aus Sicherheitsgründen niedrige Spannung der Stromschiene -1- könnte im Fahrzeug wieder herauftransformiert werden.

Feuchtigkeit macht auch bei den Oberleitungsversorgungen von Schienenfahrzeuge keine Probleme.

Überbrückende Feuchtigkeit von der Stromschiene -1- zur Fahrbahn -2- würde von einem durchfließenden Strom verdampft und dadurch beseitigt werden.

Zur Verhinderung von Störungen durch Eis und Schnee können die Stromschienen beheizt werden, z.B. durch das Einarbeiten von Heizdrähten in diese Sromschienen.

Zu der isoliert in der Mitte angeordneten Stromschiene, lassen sich identisch beidseitig Stromschienen ohne Isolation zum Bauwerk anordnen, die auch beheizt werden können.

Zur Positionsbestimmung der Fahrzeuge bieten sich im Fahrzeug angebrachte km-Zähler mit hoher Auflösung von z.B. 1 dm an. Diese würden wegen einer vorhandenen Drift an entsprechenden an den Fahrbahnen angebrachten Positionsmarken jeweils neu abgeglichen werden.

Der Zentralcomputer steuert die vorgegebene Geschwindigkeit eines Leitfahrzeuges (Master-Fahrzeug), alle anderen Fahrzeuge folgen diesem Leitfahrzeug mit vorgegebenem Abstand (Slave-Fahrzeuge).

## Patentansprüche

1. Eine Möglichkeit der Stromversorgung für elektrifizierte Straßenfahrzeuge,
**dadurch gekennzeichnet,**
**daß** der elektrische Strom über eine isoliert -4-; (-14-) an der Fahrbahn -2-angeordnete Stromschiene -1- und an dem Fahrzeug -3- angeordneten Stromabnehmern -6- dem Fahrzeug zugeführt und mittels der Stromabnehmer -5-oder -7- oder auch beiden (-5- und -7- ) über die stromleitende Fahrbahn -2-(Fahrstreifen -9- und -10-) abgeführt wird, wodurch sich eine höchst einfache Lösung dieses Problems ergibt.

2. Eine Möglichkeit nach Anspruch -1-;
**dadurch gekennzeichnet,**
**daß** die mit den beidseitigen Fahrstreifen -9- und -10 korrespondierenden Stromabnehmer -5- und -7- angehoben werden können, um beim Befahren von Abzweigungen und Einmündungen kein Kurzschluß zwischen Stromschiene -1- und Fahrbahn -2- ( -9- ; -10- ) als Erde zu erzeugen.

3. Eine Möglichkeit nach Anspruch -1-;
**dadurch gekennzeichnet;**
**daß** mittels einer verbreiterten Isolierung -14-, deren über die Stromschiene -1-hinausragende Teil breiter als die Stromabnehmerbürsten -5- bzw. -7- ist, beim Befahren von Abzweigungen u.dgl., kein Kurzschluß zwischen Stromschiene -1-und Fahrbahn -2- ( -9-; -10- ) erzeugt werden kann.
